Europäisches Patentamt

(19) European Patent Office

Office européen des brevets

(11) Numéro de publication: **0 121 962**
**B1**

(12) **FASCICULE DE BREVET EUROPEEN**

(45) Date de publication du fascicule du brevet: **03.10.90**

(51) Int. Cl.⁵: **G 02 B 6/34**

(21) Numéro de dépôt: **84200313.9**

(22) Date de dépôt: **06.03.84**

(54) Dispositif de couplage optique entre des guides d'onde lumineuse.

(30) Priorité: **11.03.83 FR 8304042**

(43) Date de publication de la demande:
**17.10.84 Bulletin 84/42**

(45) Mention de la délivrance du brevet:
**03.10.90 Bulletin 90/40**

(84) Etats contractants désignés:
**DE FR GB IT SE**

(56) Documents cités:
**EP-A-0 040 706**
**EP-A-0 080 887**
**EP-A-0 115 443**
**GB-A-2 096 350**
**US-A-4 274 706**

(73) Titulaire: **LABORATOIRES D'ELECTRONIQUE PHILIPS**
**3, Avenue Descartes**
**F-94450 Limeil-Brévannes (FR)**
(84) **FR**

(73) Titulaire: **N.V. Philips' Gloeilampenfabrieken**
**Groenewoudseweg 1**
**NL-5621 BA Eindhoven (NL)**
(84) **DE GB IT SE**

(72) Inventeur: **Hily, Claude Emile**
**Société Civile S.P.I.D. 209 Rue de L'Université**
**F-75007 Paris (FR)**
Inventeur: **Le Bris, Jean**
**Société Civile S.P.I.D. 209 Rue de L'Université**
**F-75007 Paris (FR)**
Inventeur: **Cabanie, Jean-Pierre**
**Société Civile S.P.I.D. 209 Rue de L'Université**
**F-75007 Paris (FR)**

(74) Mandataire: **Landousy, Christian et al**
**Société Civile S.P.I.D. 156, Boulevard Haussmann**
**F-75008 Paris (FR)**

Courier Press, Leamington Spa, England.

**EP 0 121 962 B1**

**Description**

La présente invention concerne un dispositif de couplage optique entre d'une part un guide d'onde lumineuse d'extrémité W transportant un nombre N de signaux de longueurs d'onde différentes et d'autre part N guides d'onde lumineuse d'extrémités $W_1$, $W_2$, ... $W_N$ transportant chacun un de ces signaux, comportant des moyens pour obtenir une sélection spectrale de ces signaux incluant un séparateur d'ondes à filtres interférentiels, et des moyens pour obtenir une sélection spatiale de ces signaux de manière à réaliser le couplage, dans lequel, les extrémités W, $W_1$, $W_2$, ... $W_N$ étant placées dans un même plan P, ces moyens pour obtenir une sélection spectrale et spatiale sont constitués de N surfaces sphériques situées les unes derrières les autres, dont les (N−1) premières par rapport au plan P sont munies respectivement de l'un desdits filtres interférentiels permettant la réflexion de l'un des signaux et la transmission des autres, dont la plus éloignée du plan P est, soit totalement réfléchissante, soit un filtre interférentiel, et dont les centres optiques respectifs $C_1$, $C_2$, ... $C_N$ sont situés dans le plan P au milieu des segments $WW_1$, $WW_2$, ... $WW_N$ définis par l'extrémité W et respectivement l'une des extrémités $W_1$, $W_2$, ..., $W_N$.

L'invention trouve son application dans le multiplexage et le démultiplexage de signaux dans le domaine des télécommunications.

Un dispositif similaire est connu de l'art antérieur par le brevet GB—2 096 350 A plublié le 13 octobre 1982. Ce document décrit un dispositif de couplage optique entre des éléments de transmission de signaux, notamment des fibres optiques, comportant des moyens pour réaliser une sélection de ces signaux en fonction de leur longueur d'onde. Ces moyens sont constitués, d'une part, par une lentille et d'autre part, par une pluralité de filtres interférentiels non parallèles disposés les uns derrières les autres. Le couplage entre une fibre portant plusieurs signaux de longueurs d'onde différentes et plusieurs fibres portant chacune un signal, est réalisé du fait que les filtres interférentiels sont formés sur les faces de prismes adjacents de manière à fixer leur espacement et leur orientation. La lentille utilisée est un barreau d'indice continûment variable qui permet la focalisation de chacun des faisceaux de longueurs d'onde différentes sur les surfaces des filtres sélectifs correspondants.

Le dispositif décrit dans le document cité présente plusieurs inconvénients majeurs. Le plus important est que le réglage d'un tel dispositif doit être effectué par déplacement des fibres optiques, qui sont des éléments présentant des dimensions de l'ordre d'une centaine de microns. Ce réglage est extrêmement délicat. Un autre inconvénient réside dans le fait que la lentille utilisée est un barreau à indice variable. Cet élément est bien connu de l'homme de l'art comme ne permettant qu'une focalisation approximative du fait que la loi d'indice n'est jamais respectée. Ce défaut de la qualité de la lentille entraîne de nombreuses pertes d'insertion dans le couplage. D'autre part ce barreau doit être taillé en lame quart d'onde pour chacune des longueurs d'onde transmises, afin d'obtenir la focalisation désirée. Ceci implique que les longueurs d'onde utilisées ne doivent pas présenter des valeurs trop éloignées les unes des autres. Dans ces conditions, un tel dispositif interdit l'utilisation simultanée des deux fenêtres permises en télécommunication, qui sont, d'une part, le domaine compris entre les longueurs d'onde 0,8 et 1,1 µm, et d'autre part, le domaine compris entre les longueurs d'onde 1,3 et 1,6 µm.

La solution qui consisterait à remplacer le barreau d'indice variable par une lentille ordinaire, ne permettrait pas de s'affranchir de la totalité de ces problèmes. En particulier le problème du réglage du dispositif par déplacement des fibres optiques, ne serait pas résolu. Il apparaîtrait d'un autre côté, le problème de la réalisation d'une telle lentille, réalisation qui étant très délicate, serait très onéreuse.

Il est également connu de l'état de la technique (selon d'article 5413), par la demande de brevet EP 0115 443 déposée sous priorité du 31—01—1983, un dispositif de couplage optique entre d'une part un guide d'onde lumineuse transportant deux signaux de longueurs d'onde différentes et d'autre part deux guides d'onde lumineuse transportant chacun un de ces signaux, comportant des moyens pour obtenir une sélection spectrale et une sélection spatiale de ces signaux. Les extrémités des guides sont situées dans un même plan et les moyens sont constitués de deux surfaces sphériques situées l'une derrière l'autre. La première de ces surfaces par rapport au plan de référence est munie d'un filtre interférentiel pour la réflexion de l'un des signaux et la transmission de l'autre. La seconde de ces surfaces est totalement réfléchissante et les centres optiques des deux surfaces sphériques sont situés dans le plan de référence au milieu des segments définis par l'extrémité du premier guide d'onde et du second et du troisième respectivement.

Mais ce document ne concerne que des groupes de deux surfaces sphériques l'une derrière l'autre pour traiter deux signaux, et d'autre part les extrémités des guides sont toutes alignées, les guides n'étant, pour cette raison, pas disposés de façon symétrique autour du guide qui transporte les signaux multiplexés.

Il est encore connu, par la demande de brevet EP 0080887, un dispositif fonctionnant selon le principe du document précédent mais dont les éléments ne sont pas accolés.

C'est pourquoi, la présente invention permet de pallier ces inconvénients en proposant un dispositif de couplage tel que défini dans le préambule, remarquable en ce que, chaque surface sphérique est constituée par la surface commune à deux lentilles respectivement plan convexe et plan concave, d'axe optique commun perpendiculaire au plan P en leurs points antinodaux confondus avec les centres optiques respectifs $C_1$, $C_2$ ... $C_N$, ces lentilles étant accolées ensemble par leurs dioptre sphérique de même rayon

2

respectivement $R_1$, $R_2$ ... $R_N$ revêtu de l'un desdits filtres interférentiels ou du miroir totalement réfléchissant, et en ce que ces couples de lentilles forment des lames à faces parallèles au plan P et sont appliqués les uns contre les autres, le rayon de courbure du Nième dioptre sphérique étant alors donné par la relation:

$$R_N = \frac{n}{n_0} I_0 + (E_1 + E_2 + \ldots + E_{N-1} + I_N)$$

où

$E_1$, $E_2$ ... $E_{N-1}$ représentent l'épaisseur des lames à faces parallèles,

$I_3$ est l'épaisseur de la lentille plan convexe de la Nième lame, mesurée sur son axe optique,

$I_0$ est la distance entre le plan P et la face avant de la première lame et $n_0$ est l'indice de ce milieu,

n est l'indice de réfraction du matériau constituant les lames.

Dans une mise en oeuvre de l'invention, le matériau situé entre le plan P et la face avant du premier couple de lentilles est l'air.

Dans une autre mise en oeuvre de l'invention, le matériau situé entre le plan P et la face avant du premier couple de lentilles est de même nature que celui qui constitue les lentilles.

Dans ces conditions, les guides de lumière peuvent être fixes et le réglage peut être fait par le déplacement, parallèlement au plan P, des différents miroirs sphériques semi-réfléchissants ou réfléchissants, ainsi réalisés.

De plus l'invention permet de parvenir à un dispositif de coût réduit par rapport au dispositif réalisé selon l'art antérieur.

Enfin, les faisceaux utilisés pour la formation des images présentent une faible inclinaison sur les axes optiques des dioptres constituant le dispositif, si bien que la superposition des images des ou d'une extrémité(s) des guides d'onde sur l'une des ou sur les extrémités des autres guides d'onde est très rigoureuse.

L'invention sera mieux comprise à l'aide de la description suivante de quelques modes de réalisation de l'invention, ladite description étant accompagnée de dessins qui représentent:

Figure 1: une vue en coupe du dispositif selon l'invention, par le plan perpendiculaire au plan de la figure 5 passant par l'axe 15.

Figure 2: une vue en coupe du même dispositif par le plan perpendiculaire au plan de la figure 5 passant par l'axe 16.

Figure 3: une vue en coupe du dispositif selon un mode de réalisation de l'invention par le plan perpendiculaire au plan de la figure 5 passant par l'axe 15.

Figure 4: une vue en coupe du dispositif selon ce mode de réalisation par le plan perpendiculaire au plan de la figure 5 passant par l'axe 16.

Figure 5: la configuration dans un plan P des extrémités des guides d'onde, ainsi que des centres de courbure des surfaces sphériques.

Figure 6: une vue en coupe du dispositif selon une variante du premier mode de réalisation par le plan perpendiculaire au plan de la figure 5 passant par l'axe 15.

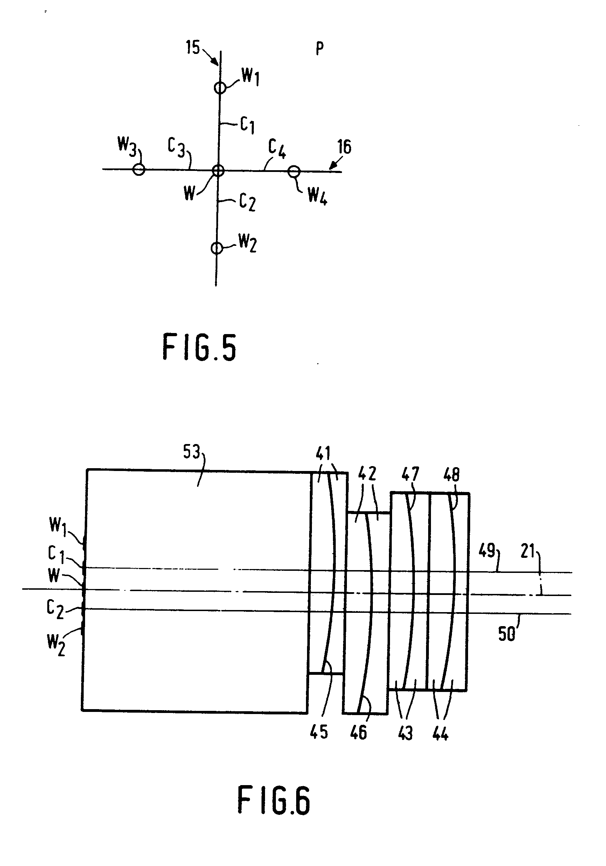

Sur la figure 5 sont représentées dans un même plan P les surfaces émettrices ou réceptrices des guides d'onde lumineuse dont les signaux sont destinés à être couplés par le dispositif selon l'invention. Par soucis de clarté, dans la présente description de deux exemples de réalisation du dispositif selon l'invention, on se bornera au couplage d'un guide d'onde d'extrémité W portant quatre signaux de longueur d'onde $\lambda_1$, $\lambda_2$, $\lambda_3$, $\lambda_4$ avec quatre guides d'onde d'extrémités $W_1$, $W_2$, $W_3$, $W_4$ portant chacun respectivement un de ces signaux.

Les extrémités des guides d'onde lumineuse présentent des surfaces de petites dimensions, en général de l'ordre du dizième de millimètre de diamètre. Dans ces conditions, ces surfaces peuvent être assimilées à leur centre représenté par l'un des points W ou $W_1$, $W_2$, $W_3$, $W_4$.

La figure 5 montre que, selon l'invention, ces extrémités sont fixées dans un même plan P. Dans les exemples de réalisation décrits les quatre extrémités $W_1$, $W_2$, $W_3$, $W_4$ sont distribuées autour de l'extrémité W, équidistante de cette dernière, et placées sur deux axes perpendiculaires passant par l'extrémité W. Les extrémités $W_1$ et $W_2$ se trouvent ainsi sur l'axe 15 et les extrémités $W_3$ et $W_4$ sur l'axe 16. Les différents guides d'onde sont tous perpendiculaires au plan P en leur extrémité.

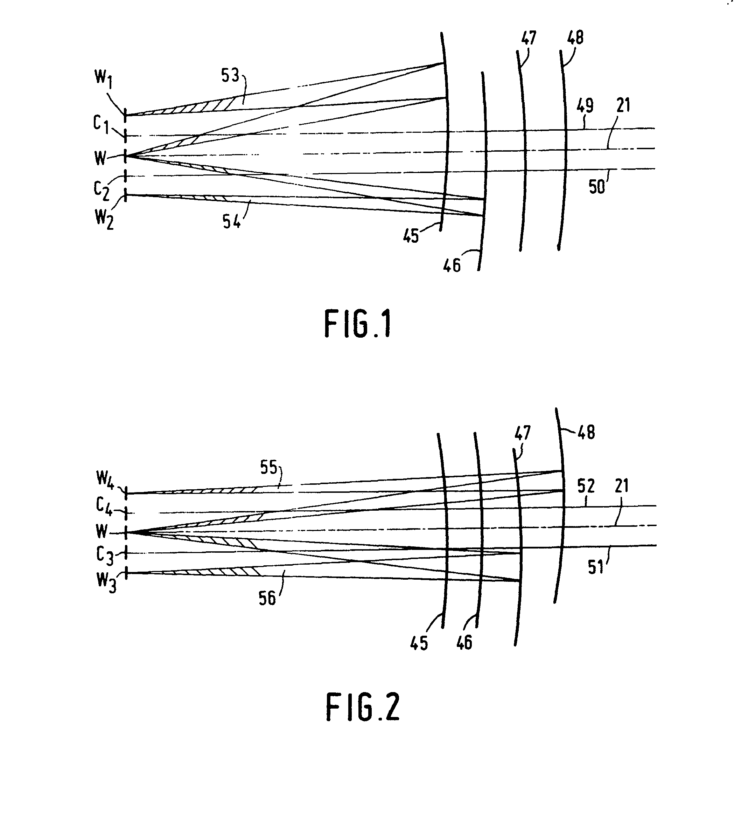

Les figures 1 et 2 illustrent le principe selon lequel fonctionne le présent dispositif de couplage.

Si W est l'extrémité émettrice, et $W_1$, $W_2$, $W_3$, $W_4$ les extrémités réceptrices, alors un faisceau lumineux de longueur d'onde $\lambda_1 + \lambda_2 + \lambda_3 + \lambda_4$ vient frapper une première surface sphérique 45 revêtue d'un filtre interférentiel apte à réfléchir les rayons de longueur d'onde $\lambda_1$. Le centre de courbure de la surface 45 étant le point $C_1$ situé dans le plan P au milieu du segment défini par l'extrémité W et l'extrémité $W_1$, les rayons issus de W et de longueur d'onde $\lambda_1$ sont réfléchis par la surface 45 sur l'extrémité $W_1$. Les rayons de longueur d'onde $\lambda_2 + \lambda_3 + \lambda_4$ sont transmis et viennent frapper la surface sphérique 46 revêtue d'un filtre interférentiel apte à réfléchir les rayons de longueur d'onde $\lambda_2$. Le centre de courbure de la surface 46 étant le point $C_2$ situé dans le plan P au milieu du segment défini par l'extrémité W et l'extrémité $W_2$, les rayons issus de W et de longueur d'onde $\lambda_2$ sont réfléchis par la surface 46 sur l'extrémité $W_2$. Les rayons de longueur d'onde $\lambda_3 + \lambda_4$ sont transmis par la surface 46.

3

De façon analogue les rayons de longueur d'onde $\lambda_3$ sont réfléchis sur l'extrémité $W_3$ par une surface sphérique 47 de centre de courbure $C_3$ situé dans le plan P au milieu du segment $WW_3$, cette surface étant revêtue d'un filtre interférentiel apte à réfléchir les rayons lumineux de longueur d'onde $\lambda_3$. Enfin les rayons lumineux de longueur d'onde $\lambda_4$ sont transmis et viennent frapper une dernière surface sphérique 48 de centre de courbure $C_4$ situé au milieu du segment $WW_4$. Cette dernière surface 48 peut être revêtue d'un miroir totalement réfléchissant. Cette solution offre l'avantage d'être la moins onéreuse. La surface 48 peut également être revêtue d'un filtre interférentiel apte à réfléchir les rayons lumineux de longueur d'onde $\lambda_4$ et à laisser passer les autres. Cette dernière solution permet d'éliminer les radiations parasites.

Ce système permet, réciproquement, si $W_1$, $W_2$, $W_3$, $W_4$ sont les extrémités émettrices, d'obtenir la réflexion des rayons lumineux issus de ces dernières, sur l'extrémité W.

D'autre part, le nombre des longueurs d'onde véhiculées n'est pas limitatif. Si ce nombre est N, il suffira d'utiliser N surfaces sphériques telles que définies ci-dessus. Le couplage se fera alors entre un guide d'onde d'extrémité W et N guides d'onde d'extrémité $W_1$, $W_2$ ... $W_N$, transportant respectivement les longueurs d'onde $\lambda_1$, $\lambda_2$ ... $\lambda_N$.

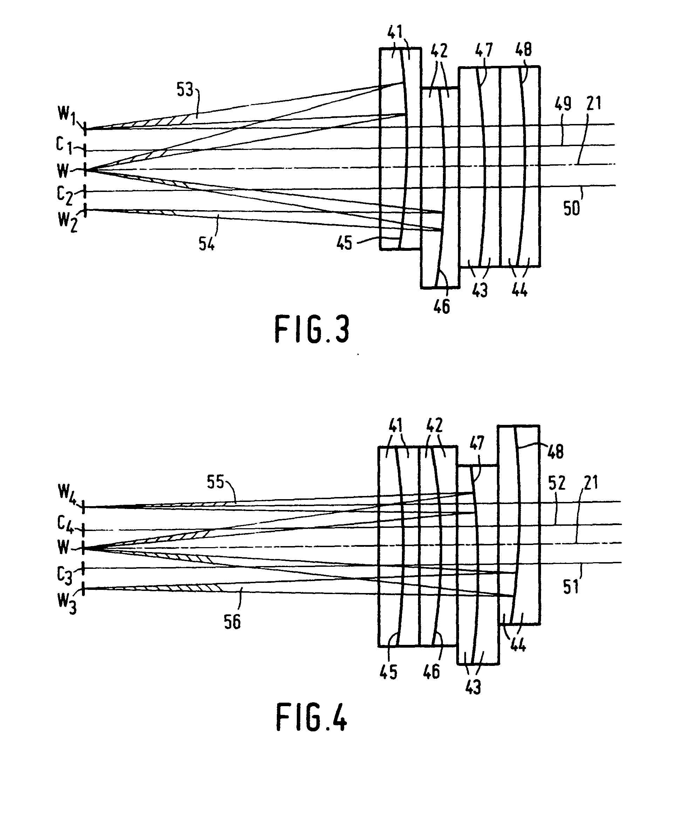

Un premier exemple de réalisation du dispositif selon l'invention est représenté figure 3, en coupe perpendiculairement au plan P selon l'axe 15, et figure 4 en coupe perpendiculairement au plan P selon l'axe 16. Il est constitué de quatre couples de lentilles. Chaque couple est formé de lentilles respectivement plan convexe et plan concave, en matériau transparent, accolées selon un dioptre sphérique commun et formant une lame à faces parallèles entre elles et au plan P. Ce dioptre est revêtu d'un filtre interférentiel réfléchissant l'une des longueurs d'onde $\lambda_1$ à $\lambda_4$ et transparent aux autres longueurs d'onde, ou encore d'un miroir réfléchissant l'ensemble des longueurs d'onde $\lambda_1$ à $\lambda_4$. Sur les figures 3 et 4 ces couples de lentilles plan convexe et plan concave sont respectivement 41, 42, 43, 44, leur dioptre sphérique étant respectivement 45, 46, 47, 48. Les dioptres 45, 46, 47 sont revêtus d'un filtre interférentiel réfléchissant respectivement les longueurs d'onde $\lambda_1$, $\lambda_2$, $\lambda_3$ et transparents aux autres longueurs d'onde. Le dioptre 48 est muni d'un miroir réfléchissant toutes les longueurs d'onde $\lambda_1$ à $\lambda_4$. Les axes optiques des lentilles constituantes de chaque lame respectivement 49, 50, 51, 52 sont perpendiculaires au plan P. Ces axes coupent, dans ce plan, les segments $WW_1$, $WW_2$, $WW_3$, $WW_4$ respectivement en leur milieu $C_1$, $C_2$, $C_3$, $C_4$. Cet points d'intersections sont confondus avec les points de grandissement $(-1)$, dits points antinodaux, (lesquels sont superposés) de la lentille "miroir" épaisse dont l'épaisseur est celle du verre précédent (dans le sens aller de la lumière) le dioptre sphérique réfléchissant correspondant, et dont le rayon de courbure est ajusté pour que les points antinodaux occupent ledit point d'intersection. A cette fin, par exemple le rayon $R_3$ du dioptre 47 satisfait à la relation:

$$R_3 = \frac{n}{n_0} l_0 + (E_1 + E_2 + l_3) \qquad (1)$$

où $E_1$ et $E_2$ représentent l'épaisseur respectivement des lames de verre 41 et 42, $l_3$ l'épaisseur de la lentille plan convexe de la lame 43, $l_0$ l'épaisseur du milieu précédant la lame 41 et situé entre le plan P et la lame 41, $l_3$ et $l_0$ étant toutes deux mesurées sur l'axe 51, n l'indice de réfraction du matériau constitutif des différentes lames et $n_0$ celui du milieu précédant la lame 41. Les dioptres 45, 46, 48 satisfont à des relations analogues.

Les points $C_1$, $C_2$, $C_3$, $C_4$ sont donc, dans cette réalisation, les points antinodaux des lentilles épaisses dont le dioptre est respectivement 45, 46, 47, 48. De par ces lentilles épaisses, l'extrémité W est conjuguée optique des extrémités respectivement $W_1$, $W_2$, $W_3$, $W_4$. De même, tout faisceau issu de $W_1$, $W_2$, $W_3$, $W_4$, tels les faisceaux respectivement 53, 54, 55, 56 de longueurs d'onde respectivement $\lambda_1$, $\lambda_2$, $\lambda_3$, $\lambda_4$ converge sur l'extrémité W et vice-versa.

Les figures 3 et 4 correspondent au cas pour lequel le milieu précédant la lame 41 est de l'air, c'est-à-dire $n_0 = 1$. Le rayon $R_3$ est alors donné par la relation:

$$R_3 = n \, l_0 + E_1 + E_2 + l_3 \qquad (2)$$

Les centres de courbure des dioptres 45, 46, 47, 48 se trouvent situés en amont du plan des extrémités des voies sur les axes respectifs 49, 50, 51, 52.

La figure 6 représente en coupe une variante de ce mode de réalisation pour lequel le milieu précédant la lame 41 est constitué du bloc 53 en verre d'indice de réfraction n, de même nature que le verre constituant les différentes lames.

Le rayon $R_3$ est alors donné par la relation:

$$R_3 = l_0 + E_1 + E_2 + l_3 \qquad (3)$$

Comme l'indique cette relation, les centres de courbure des dioptres 45 à 48 sont alors situés dans le plan P des extrémités des guides d'onde et confondus avec les points antinodaux respectivement $C_1$, $C_2$, $C_3$, $C_4$ des lentilles explicitées ci-dessus. La présence de ce bloc de verre 53 améliore la qualité de l'image réfléchie par chaque filtre interférentiel ou miroir (absence d'aberration dite de sphéricité à l'interface air-verre de la première face du bloc référence 41 des figures 3 et 4). De plus, ce montage très compact permet la mise en place d'un liquide d'adaptation entre les faces de verre et au niveau de la face d'entrée du bloc 53, ce qui entraîne une diminution des pertes de Fresnel.

A titre d'exemple, les différentes lentilles peuvent être réalisées en borosilicate. Les filtres interférentiels sont réalisés sur un tel support par dépôt de couches en nombre impair de matériaux alternativement de haut indice et de bas indice, transparents dans le domaine de longueur d'onde envisagé, le dépôt commencant par une couche d'indice élevé.

Dans le cadre de cet exemple, un filtre interférentiel réfléchissant dans le domaine de longueur d'onde compris entre 0,8 et 1 µm et transparent à l'extérieur de ce domaine peut être réalisé par une succession de 31 couches alternées d'oxyde de titane $TiO_2$ et d'oxyde de silicium $SiO_2$, l'oxyde de titane étant le matériau d'indice élevé et l'oxyde de silicium le matériau d'indice faible.

Des épaisseurs de couches permettant de réaliser de tels filtres plus particulièrement centrés sur une longueur d'onde choisie sont bien connues de l'homme de l'art.

Dans l'exemple cité où $\lambda=0,88\,\mu$, les 31 couches se succèdent selon les épaisseurs suivantes (H représentant $TiO_2$ et B représentant $SiO_2$):

$$0.86\frac{\lambda}{4}(H),\quad 0.64\frac{\lambda}{4}(B),\quad \frac{\lambda}{4}(H),\quad \frac{\lambda}{4}(B),\quad 0.98\frac{\lambda}{4}(H),\quad 0.97\frac{\lambda}{4}(B),$$

$$\frac{\lambda}{4}H,\quad 0.96\frac{\lambda}{4}(B),\quad \left\{\frac{\lambda}{4}(H),\ \frac{\lambda}{4}(B)\right\}\times 7,\quad \frac{\lambda}{4}(H),\quad 0.96\frac{\lambda}{4}(B),\quad \frac{\lambda}{4}(H),$$

$$0.97\frac{\lambda}{4}(B),\quad 0.98\frac{\lambda}{4}(H),\quad \frac{\lambda}{4}(B),\quad \frac{\lambda}{4}(H),\quad 0.64\frac{\lambda}{4}(B),\quad 0.86\frac{\lambda}{4}(H).$$

Pour obtenir des filtres interférentiels centrés sur une longueur d'onde différente, il suffit de changer l'épaisseur des couches, et leur nombre.

Il est clair que le dispositif de couplage réalisé conformément à la présente invention apporte de nombreux avantages. Sa mise en oeuvre est particulièrement facile du fait qu'il ne comprend qu'un seul type de moyens pour obtenir à la fois la sélection spatiale et la sélection spectrale des faisceaux, ces moyens étant de simples surfaces sphériques semi-réfléchissantes. Ces surfaces sont elles-mêmes faciles à obtenir par la fabrication des doublets optiques décrits. Le réglage du système est aisé puisqu'il se fait par déplacement de ces couples de lentilles les uns par rapport aux autres, parallèlement au plan P. Il est en effet beaucoup plus facile de déplacer et de régler des systèmes optiques conventionnels que des guides d'onde ou des fibres optiques. Enfin ce dispositif ne limite pas le domaine des longueurs d'onde des signaux transportés.

Il est évident que ces exemples de réalisation ne sont pas limitatifs et qu'il peut être imaginé de nombreuses variantes sans pour autant sortir du cadre de la présente invention tel que défini par les revendications ci-après annexées.

**Revendications**

1. Dispositif de couplage optique entre d'une part un guide d'onde lumineuse d'extrémité W transportant un nombre N de signaux de longueurs d'onde différentes et d'autre part N guides d'onde lumineuse d'extrémités $W_1$, $W_2$, ... $W_N$ transportant chacun un de ces signaux, comportant des moyens pour obtenir une sélection spectrale de ces signaux incluant un séparateur d'ondes à filtres interférentiels, et des moyens pour obtenir une sélection spatiale de ces signaux de manière à réaliser le couplage, dans lequel, les extrémités W, $W_1$, $W_2$, ... $W_N$ étant placées dans un même plan P, ces moyens pour obtenir une sélection spectrale et spatiale sont constitués de N surfaces sphériques situées les unes derrières les autres, dont les (N−1) premières par rapport au plan P sont munies respectivement de l'un desdits filtres interférentiels permettant la réflexion de l'un des signaux et la transmission des autres, dont la plus élignée du plan P est, soit totalement réfléchissante, soit un filtre interférentiel, et dont les centres optiques respectifs $C_1$, $C_2$, ... $C_N$ sont situés dans le plan P au milieu des segments $WW_1$, $WW_2$ ... $WW_N$ définis par l'extrémité W et respectivement l'une des extrémités $W_1$, $W_2$, ..., $W_N$, caractérisé en ce que chaque surface sphérique est constituée par la surface commune à deux lentilles respectivement plan convexe et plan concave, d'axe optique commun perpendiculaire au plan P en leurs points antinodaux confondus avec les centres optiques respectifs $C_1$, $C_2$ ... $C_N$, ces lentilles étant accolées ensemble par leurs dioptre sphérique de même rayon respectivement $R_1$, $R_2$ ... $R_N$ revêtu de l'un desdits filtres interférentiels ou du miroir totalement réfléchissant, et en ce que ces couples de lentilles forment des lames à faces parallèles au plan P et sont appliqués les uns contre les autres, le rayon de courbure du Nième dioptre sphérique étant alors donné par la relation:

$$R_N = \frac{n}{n_0} I_0 + (E_1 + E_2 + \ldots + E_{N-1} + I_N)$$

où

$E_1, E_2 \ldots E_{N-1}$ représentent l'épaisseur des lames à faces parallèles,

$I_3$ est l'épaisseur de la lentille plan convexe de la Nième lame, mesurée sur son axe optique,

$I_0$ est la distance entre le plan P et la face avant de la première lame et $n_0$ est l'indice de ce milieu,

n est l'indice de réfraction du matériau constituant les lames.

2. Dispositif selon la revendication 1, caractérisé en ce que le matériau situé entre le plan P et la face avant du premier couple de lentilles est l'air.

3. Dispositif selon la revendication 1, caractérisé en ce que le matériau situé entre le plan P et la face avant du premier couple de lentilles, est de même nature que celui qui constitue les lentilles.

4. Dispositif selon l'une des revendications 2 ou 3, caractérisé en ce que, pour son réglage, les guides de lumière étant fixes, les lames à faces parallèles formées des couples de lentilles respectivement plan convexe et plan concave sont mobiles les unes par rapport aux autres parallèlement au plan P.

**Patentansprüche**

1. Vorrichtung zum optischen Koppeln zwischen einerseits einem Lichtwellenleiter mit dem Endpunkt W, der eine Anzahl von N Signalen mit verschiedener Wellenlänge transportiert, und andererseits N Lichtwellenleitern mit den Endpunkten $W_1, W_2, \ldots, W_N$, die je eines dieser Signale transportieren, mit Mitteln zum Erhalten einer Spektralauswahl dieser Signale, wobei diese Mittel einen Wellenabscheider mit Interferenzfiltern umfassen, und mit Mitteln zum Erhalten einer räumlichen Auswahl dieser Signale zur Verwirklichung der Kopplung, bei der die Endpunkte $W, W_1, W_2, \ldots, W_N$ in einer selben Ebene P angeordnet sind, wobei diese Mittel zum Erhalten einer spektralen und räumlichen Auswahl aus N sphärischen Oberflächen zusammengesetzt sind, die hintereinander angeordnet sind, von denen die (N−1) ersten in bezug auf die Ebene P mit je einem der Interferenzfilter verbunden sind, wodurch die Reflexion eines der Signale und die Übertragung der anderen ermöglicht wird, von denen die entfernteste von der Ebene P entweder völlig reflektierend, oder ein Interferenzfilter ist, und von denen die jeweiligen optischen Mitten $C_1, C_2, \ldots C_N$ in der Ebene P in der Mitte der Segmente $WW, WW_2, \ldots, WW_N$ angeordnet sind, die durch den Endpunkt W und jeweils einen der Endpunkte $W_1, W_2, \ldots, W_N$ bestimmt sind, dadurch gekennzeichnet, daß jede optische Oberfläche durch die gemeinsame Oberfläche zweier Linsen gebildet wird, die plankonvex bzw. plankonkav zur gemeinsamen optischen Achse senkrecht zur Ebene P in ihren antinodalen Punkten verläuft, die mit den jeweiligen optischen Mitten $C_1, C_2, \ldots, C_N$ zusammenkommen, wobei dies Linsen durch ihr sphärisches Diopter mit gleichem Strahl $R_1, R_2$ bzw. $R_N$, die mit einem der Interferenzfilter oder mit dem voll reflektierenden Spiegel bekleidet sind, zusammengefügt sind, und daß diese Linsengruppen Platten mit parallel zur Ebene P verlaufenden Flächen bilden und aneinander gestellt werden, wobei der Krümmungsstrahl des sphärischen Nieme-Diopters also durch nachstehende Gleichung beschrieben wird:

$$R_N = \frac{n}{n_0} I_0 + (E_1 + E_2 + \ldots + E_{N-1} + I_N)$$

worin

$E_1, E_2, \ldots, E_{N-1}$ die Dicke der Platten mit parallelen Flächen darstellen,

$I_N$ die Dicke der plankonvexen Linse der Nieme-Platte ist, die an ihrer optischen Achse gemessen ist,

$I_0$ der Abstand zwischen der Ebene P und der Fläche vor der ersten Platte und $n_0$ der Index dieses Mediums sind, und

n der Brechungsindex des die Platten bildenden Werkstoffs ist.

2. Vorrichtung nach Anspruch 1, dadurch gekennzeichnet, daß der Werkstoff zwischen der Ebene P und der Fläche vor dem ersten Linsenpaar Luft ist.

3. Vorrichtung nach Anspruch 1, dadurch gekennzeichnet, daß der Werkstoff zwischen der Ebene P und der Fläche vor dem ersten Linsenpaar gleich der Art ist, aus der die Linsen zusammengesetzt sind.

4. Vorrichtung nach einem der Ansprüche 2 oder 3, dadurch gekennzeichnet, daß für die Regelung die Lichtleiter festgesetzt sind, und die Platten mit parallelen Flächen, die aus den plankonvexen bzw. plankonkaven Linsenpaaren gebildet sind, parallel zur Ebene P gegeneinander verschiebbar sind.

**Claims**

1. An optical coupling device for coupling an end face W of an optical waveguide which transmits a number N of signals of different wavelengths with the end faces $W_1, W_2, \ldots W_N$ of N optical waveguides which each transmit one of said signals, which device comprises means for obtaining a spectral selection of said signals, which selection means comprise a wavelength separator provided with interference filters, and means for obtaining a spatial selection of said signals so as to realise the coupling, in which the end faces W, $W_1$, $W_2$, ... $W_N$ of the waveguides are disposed in the same plane P, the means for obtaining a spatial and spectral selection comprise N spherical surfaces situated after one another, of which the first (N−1) surfaces with respect to the plane P are respectively provided with one of said interference filters, which reflects one of the signals and transmits the other signals, and of which the spherical surface which is remotest from the plane P is either totally reflecting or is an interference filter, and of which the respective optical centres $C_1$, $C_2$, ... $C_N$ are situated in the plane P midway the segments $WW_1$, $WW_2$, ... $WW_N$ defined by the end face W and one of the end faces $W_1$, $W_2$, ... $W_N$, respectively, characterized in that each spherical surface is formed by the surface which is common to two lenses which are planoconvex and planoconcave, respectively, which lenses have a common optical axis which is perpendicular to the plane P in their antinodal points coinciding with the respective optical centres $C_1$, $C_2$, ... $C_N$, the spherical surfaces of said lenses having equal radii $R_1$, $R_2$ ... $R_N$ being coupled together and being provided with one of said interference filters or the totally reflecting mirror, and in that said pairs of lenses form plates with surfaces parallel to the plane P and are arranged against each other, the radius of curvature of the $N^{th}$ spherical surface being given by the relationship:

$$R_N = \frac{n}{n_0} I_0 + (E_1 + E_2 + \ldots + E_{N-1} + I_N)$$

where

$E_1$, $E_2$ ... $E_{N-1}$ are the thicknesses of the plates with parallel surfaces,

$I_N$ is the thickness of the planoconvex lens of the $N^{th}$ plate measured along its optical axis,

$I_0$ is the distance between the plane P and the front face of the first plate and $n_0$ is the refractive index of this medium,

n is the refractive index of the material of the plates.

2. A device as claimed in Claim 1, characterized in that the material between the plane P and the front face of the first pair of lenses is air.

3. A device as claimed in Claim 1, characterized in that the material between the plane P and the front face of the first pair of lenses is of the same nature as that of which the lenses are made.

4. A device as claimed in any one of Claim 2 or 3, characterized in that for its adjustment, at which the optical waveguides are stationary, the plates having parallel surfaces formed from pairs of lenses which are planoconvex and planoconcave, respectively, are movable with respect to each other, parallel to the plane P.

FIG.1

FIG.2

FIG.3

FIG.4

# FIG.5

# FIG.6